# EUROPÄISCHE PATENTSCHRIFT

(11) **EP 2 168 854 B1**
(45) Veröffentlichungstag und Bekanntmachung des Hinweises auf die Patenterteilung: **11.12.2013**
(21) Anmeldenummer: 09012352.2
(22) Anmeldetag: 29.09.2009
(51) Int. Cl.: B62J 7/08

(54) **Befestigungssystem für Taschen oder Behälter**
Attachment system for bags or containers
Poste de fixation ou système de fixation pour sacs ou récipients

(43) Veröffentlichungstag der Anmeldung: 31.03.2010
(73) Patentinhaber: Ortlieb, Hartmut, 91560 Heilsbronn (DE)
(72) Erfinder: Ortlieb, Hartmut, 91560 Heilsbronn (DE)
(74) Vertreter: Schuhmann, Albrecht

(56) Entgegenhaltungen:
- EP-A1- 0 477 010
- DE-A1- 19 713 406
- DE-C- 724 639
- DE-U1- 20 303 229
- DE-U1-202006 017 966
- US-A- 2 423 003

## Beschreibung

Die vorliegende Erfindung betrifft ein Befestigungssystem für Taschen oder Behälter, insbesondere für Packtaschen zum Anbringen an einer Haltevorrichtung wie einem Gepäckträger oder dergleichen mit den Merkmalen des Oberbegriffs des Anspruchs 1.

Die DE-C-724 639 offenbart ein System mit den Merkmalen des Oberbegriffs des Anspruchs 1.

Packtaschen für Fahrräder und insbesondere zum Anbringen an Gepäckträgern sind in zahlreichen Varianten auf dem Markt. Diese verfügen meist über Haltevorrichtungen, wie z.B. Hacken oder Riemen, welche an den Taschen angenäht oder anders befestigt sind, mittels welcher diese an der oberen Strebe des Gepäckträgers angebracht werden.
Viele Ausführungen mit weichen Taschen hängen damit am Gepäckträger "schlapp" herunter und baumeln unkontrolliert herum und können leicht in die Speichen oder in die Kette gelangen oder in Richtung nach außen an Gegenständen streifen oder gar hängen bleiben.
Packtaschen mit einer besseren Formgebung sind dagegen meistens sehr schwer und werden demzufolge ungern an Fahrrädern montiert, da dadurch eine erhöhte körperlicher Anstrengung bedingt ist.

Als weiterer Nachteil bei bekannten Packtaschen hat sich gezeigt, dass die Fläche des Gepäckträgers meist nicht mehr nutzbar ist, da die seitlichen Pachtaschen, welche mit den Befestigungsmitteln an der oberen Strebe des Gepäckträgers angebracht sind, über die Gepäckträgerfläche hinausragen. Meist werden Packtaschen beim Fahren auch als hinderlich oder unangenehm empfunden da sich mit diesen, insbesondere wenn sie falsch beladen werden ein etwas schwammigeres Fahrverhalten einstellt was viele Radfahrer verunsichert.

Aufgabe der vorliegenden Erfindung ist es daher, eine Tasche auszubilden, welche die genannten Nachteile möglichst nicht aufweist und über verbesserte Handlingeigenschaften verfügt.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß sind Befestigungsstellen bzw. Befestigungssystem für Taschen oder Behälter, insbesondere für Packtaschen zum Anbringen an einer Haltevorrichtung wie einem Gepäckträger oder dergleichen, wobei die Befestigungsstellen auch wasserdicht mit der Tasche oder dem Behälter verbunden sind und zwischen wenigstens zwei Befestigungsstellen ein zusätzliches Versteifungsmittel für die Tasche oder den Behälter angeordnet ist wobei die Befestigungsmittel im wesentlichen bündig mit der außenliegenden Fläche der Tasche sind. Die Versteifungsmittel können der Tasche angepasst als Rohre, eine Schiene, eine Leiste, eine Platte oder dergleichen ausgeführt sein und verleihen der Tasche eine, insbesondere im oberen Bereich sehr gute Formgebung. Eine alternative Ausführung könnte die Verwendung einer kompletten steifen Rückwand der Tasche sein.

Durch die genannte Ausführung liegen die Taschen optimal eng am Gepäckträger an und können in weichen Materialien ausgeführt werden, da die oben, zwischen den Befestigungspunkten eingebrachte Verstärkung der Tasche ausreichend Form verleiht, damit diese nicht unkontrolliert am Gepäckträger herunterhängt.
Der Einsatzbereich ist durch die wasserdichte Ausführung, bevorzugt aufschweißen oder verschrauben bzw. vernieten von Befestigungsmitteln mit wasserdichten Abschlüssen sehr groß und wird dementsprechend bevorzugt bei wasserdichten Packtaschen entsprechend eingesetzt.
Die Befestigungsmittel sind mit der Versteifung im oberen Bereich der Tasche zusätzlich mechanisch verbunden, was bevorzugt durch aufschrauben oder aufnieten erfolgt, wobei alle Überstände der Verbindung bevorzugt in den inneren Bereich der Tasche oder des Behälters gelegt werden um an der, dem Gepäckträger zugewandten Rückseite der Tasche eine möglichst bündige Fläche zu erhalten, wobei eine bevorzugte Ausführung einen maximalen Überstand der Befestigungsstellen von 10mm aufweist.

Die Befestigungsstellen welche auf die Tasche wasserdicht geschweißt, geschraubt oder genietet sind haben eine in Richtung Tasche reichende Aufnahme für eine Haltevorrichtung wie einen Haken oder einen Pinn in welche dieses Gegenstück, angebracht an bevorzugt einem Gepäckträger eingeführt werden kann und bis zum Anschlag in dem Befestigungselement eingeführt werden kann. In der bevorzugten Ausführung besitzt wenigsten eine Befestigungsstelle an der Tasche oder an dem Behälter eine Verriegelung der Befestigungsstelle, welche verhindert, dass die Tasche nach zusammenführen der Befestigungsstelle mit dem Gegenstück am Gepäckträger unbeabsichtigt wieder herausfällt ohne die Verriegelung zu betätigen.
Es hat sich als sehr bedienungsfreundlich erwiesen die Verriegelung als eine Art Hacken auszuführen welcher sich um einen Drehpunkt bewegt und an dieser Stelle den Hacken mit einem Federelement zu versehen. Auf diese Weise kann die Tasche in Position gehalten werden wobei der Haltepunkt am Gepäckträger mit dem Befestigungselement übereinstimmt und der Haken oder der Pinn am Gepäckträger in das Befestigungselement eingeführt werden. Der Pinn am Gepäckträger gleitet so beispielsweise in das Innere der Befestigungselementes, schiebt dabei den mit der Federkraft beaufschlagten Verriegelungshaken beiseite und rastet so hinter diesem ein. Der Verriegelungshaken ist in dieser Position gegen ein Herausziehen des Befestigungselementes aus dem Pinn am Gepäckträger gesperrt und es bedarf den Riegel gegen die Federkraft zurückzuziehen um die Tasche wieder von der Befestigung am Gepäckträger zu lösen. Für diesen Entriegelungsvorgang ist die Tasche mit einer Handhabe ausgestattet, mittels welcher der Verriegelungshaken gegen die Kraft der Feder zurück gedreht werden kann, wobei diese Handhabe als Tragegriff der Tasche ausgeführt werden kann.

Eine bevorzugte Form der Tasche weist im oberen Bereich der Tasche zwei Befestigungsstellen auf der Rückseite auf, welche mit einer erfindungsgemäßen im Inneren der Tasche eingebrachten Versteifung mechanisch verbunden ist, sowie einer Befestigungsstelle im unteren Bereich der Tasche, welche bevorzugt mittig angeordnet ist. Mit dieser Dreiecksaufnahme ist eine Packtasche, welche üblicherweise nach oben etwas größer ausgeführt ist, sehr gut an einem Gepäckträger anzubringen.

Durch mögliche Anordnungen der Befestigungsstellen an der Tasche lassen sich verschiedene Handhabungen darstellen. Die Tasche kann somit durch von oben einschieben in die Halterungen an einem Gepäckträger angebracht werden, dabei gleiten die Pinns am Gepäckträger in die Befestigungsstellen an der Rückseite der Tasche und rasten mit der Verriegelung ein. Die Befestigungsstellen an der Tasche können aber auch in anderer Orientierung angebracht werden, womit die Handhabung durch zunächst einführen der unteren Befestigungsstelle in die untere Aufnahme an einem Gepäckträger erfolgt, anschließend wird die Tasche gegen den Gepäckträger gedrückt und seitlich eingedreht, womit die Befestigungsstellen in die Haltegriffe am Gepäckträger eingeführt werden und verriegelt werden.

Im Folgenden wird die Erfindung anhand von Zeichnungen beispielhaft näher beschrieben, dabei zeigen:
- Fig.1: eine Darstellung einer Tasche von hinten
- Fig. 2: eine perspektivische Darstellung einer Tasche
- Fig. 3: eine perspektivische Darstellung einer Tasche im Schnitt
- Fig. 4: eine Detailzeichnung des Schnitts von Fig. 3
- Fig. 5.: Eine perspektivische Darstellung eines Befestigungselements

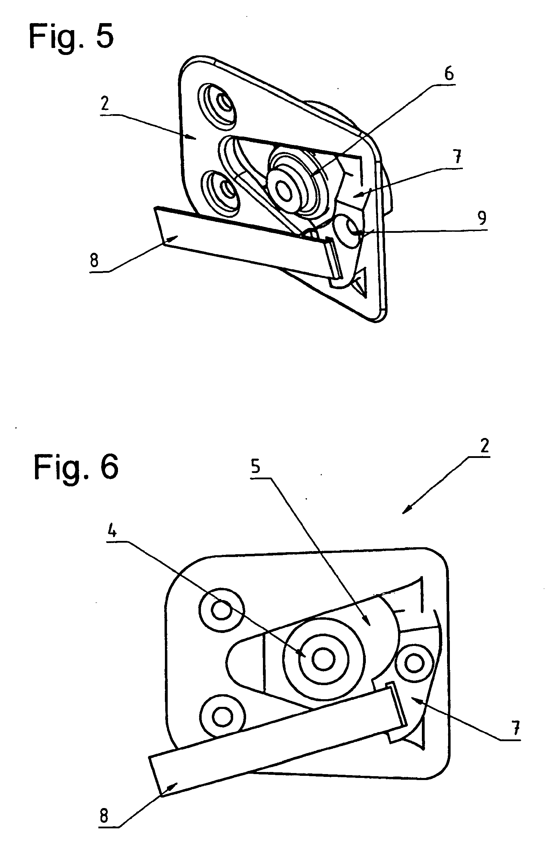

- Fig. 5.: Eine perspektivische Darstellung eines Befestigungselements

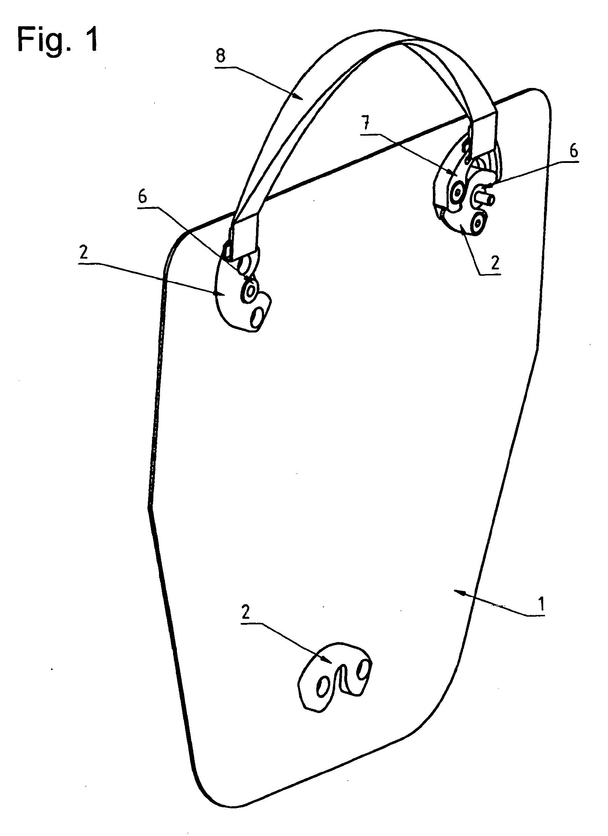

In Fig. 1 ist eine Ausfertigung dargestellt in welcher eine Packtasche 1 mit drei Befestigungsstellen 2 ausgeführt ist, angeordnet in Dreiecksform. Von den beiden oberen Befestigungsstellen 2 ist die rechte mit einer Verriegelung 7 ausgeführt, welche über den Haltegriff 8 der Tasche ein als Bedienteil betätigt werden kann. Die drehbare Feder 9 beaufschlagte Drehanordnung ist in Fig. 5 oder Fig. 6 zu erkennen, in welcher eine Befestigungsteil 2 mit eingeführtem Haltepinn 6 eines Gepäckträger gezeigt ist. Mit Zug am Griffband 8 würde der Riegel 7 zurückgleiten und das Befestigungsteil 2, bzw. die Tasche könnte aus dem Pinn 6 nach links heraus bewegt werden.

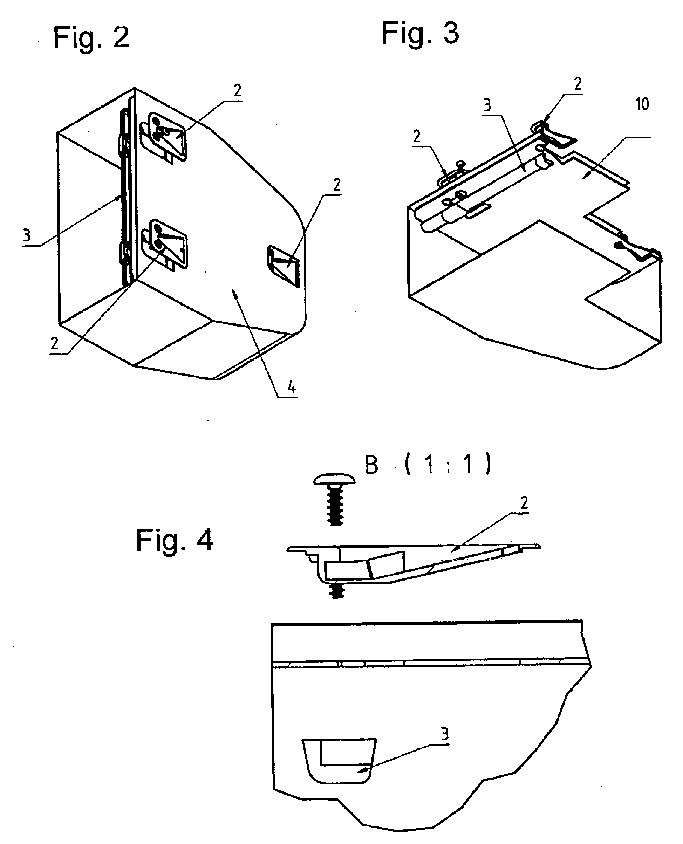

In Fig. 2 ist gut zu erkennen, das die Befestigungsstellen 2 auf die Tasche 4 aufgebracht oder in die Tasche eingedrückt sind und mit der Taschenrückwand eine im Wesentlichen plane Fläche bilden. Die Befestigungsstellen 2 sind auf der Innenseite der Tasche mit einer Versteifung 3, in Fig. 3 als Platte 10 oder Strebe 3 zu sehen, mechanisch verbunden und auf der Tasche aufgeschweißt oder mindestens wasserdicht abgeschlossen. Dies ist in Fig. 4 nochmals beispielhaft sehr anschaulich dargestellt.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Befestigungssystem für Taschen oder Behälter, insbesondere für Packtaschen zum Anbringen an einer Haltevorrichtung wie einem Gepäckträger oder dergleichen,
**dadurch gekennzeichnet,**
**dass** die Befestigungsstellen (2) mit der Tasche (1) oder dem Behälter wasserdicht verbunden sind und zwischen wenigstens zwei Befestigungsstellen (2) ein zusätzliches Versteifungsmittel (3, 10) für die Tasche (1) oder den Behälter im Inneren der Tasche angeordnet ist wobei die Befestigungsmittel (2) im Wesentlichen bündig mit der außenliegenden Fläche der Tasche (1) sind und die Befestigungsstellen (2) über eine mechanische Aufnahme (5) für ein Gegenstück (6) an einer Haltevorrichtung und einer Verriegelung (7), welche mit einem Federelement beaufschlagt ist, verfügen, wobei das Gegenstück (6) des Gepäckträgers beim Anlegen und/oder Einhängen der Tasche in das Innere des Befestigungselements, welches wenigstens eine, das Einführen begünstigende, Keilform aufweist, eingeführt wird, dabei einen mit der Federkraft beaufschlagten Verriegelungshaken beiseite schiebt und hinter diesem einrastet.

2. Tasche oder Behälter mit Befestigungssystem nach Anspruch 1,
**dadurch gekennzeichnet,**
**dass** die Befestigungsstellen (2) auf die Tasche (1) oder den Behälter aufgeschweißt sind.

3. Tasche oder Behälter mit Befestigungssystem nach Anspruch 1,
**dadurch gekennzeichnet,**
**dass** die Befestigungsstellen (2) auf die Tasche (1) oder den Behälter aufgeschweißt und mit der Versteifung (3) mechanisch verbunden sind.

4. Tasche oder Behälter mit Befestigungssystem nach Anspruch 3,
**dadurch gekennzeichnet,**
**dass** die Befestigungsstellen (2) mit der Versteifung (3) verschraubt oder vernietet sind.

5. Befestigungsstellen bzw. Befestigungssystem nach Anspruch 1,
**dadurch gekennzeichnet,**
**dass** Teile der Befestigungsstellen (2) in die Taschenbefestigungsfläche (4) in den Innenraum der Tasche (1) oder des Behälters hineinragen.

6. Befestigungsstellen bzw. Befestigungssystem nach Anspruch 1,
**dadurch gekennzeichnet,**
**dass** die Befestigungsstellen (2) eine mechanische Aufnahme (5) für ein Gegenstück (6) an einer Haltevorrichtung aufweisen.

7. Befestigungsstellen bzw. Befestigungssystem nach Anspruch 1,
**dadurch gekennzeichnet,**
**dass** die Befestigungsstelle (2) maximal 10mm über die anzubringende Taschenfläche hinausragt.

8. Tasche oder Behälter mit Befestigungssystem nach Anspruch 1,
**dadurch gekennzeichnet,**
**dass** die Tasche (1) als Packtasche mit an der Rückwand zwei oberen Befestigungsstellen (2), zwischen welchen eine mechanische Versteifung (3) für die Tasche verläuft, ausgeführt ist und über eine untere Befestigungsstelle (2) an der Rückwand verfügt.

9. Befestigungssystem für Taschen oder Behälter nach Anspruch 1,
**dadurch gekennzeichnet,**
**dass** die Tasche (1) oder der Behälter über Mittel (8) verfiigt die Verriegelung (7) der mindestens einen Befestigungsstelle (2) zu Verriegeln oder zu Entriegeln.

10. Tasche oder Behälter mit Befestigungssystem nach vorgenannten Ansprüchen,
**dadurch gekennzeichnet,**
**dass** der Tragegriff der Tasche (1) oder des Behälters als Bedienteil (8) zum Entriegeln oder Verriegeln der mindestens einen Befestigungsstelle (2) ausgeführt ist.

11. Tasche oder Behälter mit Befestigungssystem nach vorgenannten Ansprüchen,
**dadurch gekennzeichnet,**
**dass** die Tasche oder der Behälter mit einem zusätzlichen Drahtseil als Bedienteil (8) zum Entriegeln oder Verriegeln der mindestens einen Befestigungsstelle ausgeführt ist.

12. Tasche oder Behälter mit Befestigungssystem nach Anspruch 1,
**dadurch gekennzeichnet,**
**dass** die Versteifung (3) zwischen den wenigstens zwei Befestigungsstellen (2) im oberen Bereich auf der Rückseite der Tasche (1) ausgeführt ist.

13. Tasche oder Behälter mit Befestigungssystem nach Anspruch 1,
**dadurch gekennzeichnet,**
**dass** die Versteifung (3, 10) zwischen den wenigstens zwei Befestigungsstellen (2) als Leiste (3) ausgeführt ist.

14. Tasche oder Behälter mit Befestigungssystem nach Anspruch 1,
**dadurch gekennzeichnet,**
**dass** die Versteifung (3, 10) zwischen den wenigstens zwei Befestigungsstellen (2) als Platte (10) ausgeführt ist.

15. Tasche oder Behälter mit Befestigungssystem nach Anspruch 1,
**dadurch gekennzeichnet,**
**dass** die Verbindung der Befestigungsstellen (2) auf der Tasche (1) oder den Behälter als Schraubverbindung oder Nietverbindung ausgeführt ist.

## Claims

1. A fastening system for bags or containers, in particular for panniers to be secured to a mounting device, such as a bicycle rack or the like,
**characterized in that**
the fastening sites (2) are joined watertight with the bag (1) or container, and an additional reinforcing means (3, 10) for the bag (1) or container is arranged inside the bag between at least two fastening sites (2), wherein the fastening means (2) are essentially flush with the outside surface of the bag (1), and the fastening sites (2) have a mechanical receptacle (5) for a mating component (6) on a mounting device and a locking device (7), which is loaded with a spring element, wherein, during placement and/or suspension of the bag, the mating component (6) of the bicycle rack is introduced into the interior of the fastening element, which exhibits a wedge shape that facilitates introduction, thereby pushing aside and latching in behind a locking hook exposed to the spring force.

2. The bag or container with fastening system according to claim 1,
**characterized in that**
the fastening sites (2) are welded onto the bag (1) or container.

3. The bag or container with fastening system according to claim 1,
**characterized in that**
the fastening sites (2) are welded onto the bag (1) or container, and mechanically joined with the reinforcement (3).

4. The bag or container with fastening system according to claim 3,
**characterized in that**
the fastening sites (2) are screwed or riveted with the reinforcement (3).

5. The fastening sites or fastening system according to claim 1,
**characterized in that**
parts of the fastening sites (2) in the bag fastening surface (4) project into the interior of the bag (1) or container.

6. The fastening sites or fastening system according to claim 1,
**characterized in that**
the fastening sites (2) exhibit a mechanical receptacle (5) for a mating part (6) on a mounting device.

7. The fastening sites or fastening system according to claim 1,
**characterized in that**
the fastening parts (2) project at most 10 mm over the bag surface to be attached.

8. The bag or container with fastening system according to claim 1,
**characterized in that**
the bag (1) is designed as a pannier with two upper fastening sites (2) on the rear wall, between which runs a mechanical reinforcement (3) for the bag, and has a lower fastening site (2) on the rear wall.

9. The fastening system for bags according to claim 1,
**characterized in that**
the bag (1) or container has means (8) to lock or unlock the locking device (7) of the at least one fastening site (2).

10. The bag or container with fastening system according to one of the preceding claims,
**characterized in that**
the carrying handle of the bag (1) or container is designed as an operating element (8) for unlocking or locking the at least one fastening site (2).

11. The bag or container with fastening system according to one of the preceding claims,
**characterized in that**
the bag or container is designed with an additional cable as an operating element (8) for unlocking or locking the at least one fastening site.

12. The bag or container with fastening system according to claim 1,
**characterized in that**
the reinforcement (3) between the at least two fastening sites (2) is designed in the upper region on the rear side of the bag (1).

13. The bag or container with fastening system according to claim 1,
**characterized in that**
the reinforcement (3, 10) between the at least two fastening sites (2) is designed as a bracket (3).

14. The bag or container with fastening system according to claim 1,
**characterized in that**
the reinforcement (3, 10) between the at least two fastening sites (2) is designed as a plate (10).

15. The bag or container with fastening system according to claim 1,
**characterized in that**
the connection between the fastening sites (2) on the bag (1) or container is designed as a screwed joint or riveted joint.

## Revendications

1. Système de fixation pour des sacs ou des contenant, notamment pour des sacs de rangement destinés à être montés sur un dispositif de maintien, comme un porte-bagages ou similaires, **caractérisé en ce que** les zones de fixation (2) sont reliées de manière étanche à l'eau avec le sac (1) ou le contenant et **en ce qu'**entre au moins deux zones de fixation (2), un moyen de renfort (3, 10) supplémentaire pour le sac (1) ou le contenant est placé à l'intérieur du sac, les moyens de fixation (2) étant sensiblement à fleur de la surface extérieure du sac (1) et les zones de fixation (2) disposant d'un logement mécanique (5) pour une pièce antagoniste (6) sur un dispositif de maintien et d'un verrouillage (7) qui est soumis à un élément formant ressort, lors de l'appui et/ou de l'accrochage du sac à l'intérieur de l'élément de fixation qui présente au moins forme de clavette favorisant l'introduction, la pièce antagoniste (6) du porte-bagages étant introduite, poussant de côté à cet effet un crochet de verrouillage soumis à la force du ressort et s'enclenchant derrière celui-ci.

2. Sac ou contenant avec un système de fixation selon la revendication 1, **caractérisé en ce que** les zones de fixation (2) sont soudées sur le sac (1) ou sur le contenant.

3. Sac ou contenant avec un système de fixation selon la revendication 1, **caractérisé en ce que** les zones de fixation (2) sont soudées sur le sac (1) ou sur le contenant et sont mécaniquement reliées avec le renfort (3).

4. Sac ou contenant avec un système de fixation selon la revendication 3, **caractérisé en ce que** les zones de fixation (2) sont vissées ou rivetées sur le renfort (3).

5. Zones de fixation ou système de fixation selon la revendication 1, caractérisé(es) en ce que des pièces des zones de fixation (2) saillissent dans la surface de fixation de sac (4), à l'intérieur du sac (1) ou du contenant.

6. Zones de fixation ou système de fixation selon la revendication 1, caractérisé(es) en ce que les zones de fixation (2) comportent un logement mécanique (5) pour une pièce antagoniste (6) sur un dispositif de maintien.

7. Zones de fixation ou système de fixation selon la revendication 1, caractérisé(es) en ce que les zones de fixation (2) saillissent d'un maximum de 10 mm pardessus la surface de sac à monter.

8. Sac ou contenant avec un système de fixation selon la revendication 1, **caractérisé en ce que** le sac (1) est réalisé en tant que sac d'emballage avec sur la paroi arrière deux zones de fixation (2) supérieures, entre lesquelles s'étend un renfort (3) mécanique pour le sac et dispose d'une zone de fixation (2) sur la paroi arrière.

9. Système de fixation pour des sacs ou des contenants selon la revendication 1, **caractérisé en ce que** le sac (1) ou le contenant dispose de moyens (8) pour verrouiller ou déverrouiller le verrouillage (7) de l'au moins une zone de fixation.

10. Sac ou contenant avec un système de fixation selon les revendications précédentes, **caractérisé en ce que** la poignée de transport du sac (1) ou du contenant est réalisée en tant que pièce de manoeuvre pour déverrouiller ou verrouiller l'au moins une zone de fixation (2).

11. Sac ou contenant avec système de fixation selon les revendications précédentes, **caractérisé en ce que** le sac ou le contenant est réalisé avec un câble supplémentaire en fil métallique en tant que pièce de manoeuvre (8) pour déverrouiller ou verrouiller l'au moins une zone de fixation.

12. Sac ou contenant avec système de fixation selon la revendication 1, **caractérisé en ce que** le renfort (3) est réalisé entre les aux moins deux zones de fixation (2) dans la zone supérieure sur la face arrière du sac (1).

13. Sac ou contenant avec système de fixation selon la revendication 1, **caractérisé en ce que** le renfort (3, 10) est réalisé en tant que baguette (3) entre les au moins deux zones de fixation (2).

14. Sac ou contenant avec système de fixation selon la revendication 1, **caractérisé en ce que** le renfort (3, 10) est réalisé en tant que plaque (10) entre les au moins deux zones de fixation (2).

15. Sac ou contenant avec système de fixation selon la revendication 1, **caractérisé en ce que** la liaison des zones de fixation (2) sur le sac (1) ou sur le contenant est réalisée en tant que liaison par vissage ou en tant que liaison par rivetage.
